# EUROPEAN PATENT SPECIFICATION

(11) **EP 2 323 883 B1**
(45) Date of publication and mention of the grant of the patent: **23.01.2019**
(21) Application number: 09806915.6
(22) Date of filing: 29.06.2009
(51) Int. Cl.: B60W 10/10, B60W 10/06, F16H 59/54, F16H 63/50, B60T 7/12, B60W 10/18

(54) **AUTOMATED GEAR SHIFTING SYSTEM AND METHOD**
AUTOMATISIERTES GANGSCHALTUNGSSYSTEM UND -VERFAHREN
PROCÉDÉ ET SYSTÈME DE CHANGEMENT DE VITESSE AUTOMATISÉ

(30) Priority: 12.08.2008 SE 0801783
(43) Date of publication of application: 25.05.2011
(73) Proprietor: Scania CV AB (publ), 151 87 Södertälje (SE)
(72) Inventor: BRÄNNSTRÖM, Anders, S-120 69 Stockholm (SE)
(74) Representative: Scania CV AB
(86) International application number: PCT/SE2009/050824
(87) International publication number: WO 2010/019093

(56) References cited:
- EP-A2- 0 742 394
- EP-A2- 1 158 221
- GB-A- 2 337 137
- US-A- 3 667 629
- US-A- 5 052 531
- US-A1- 2001 049 575
- US-A1- 2004 055 802
- US-A1- 2004 110 601
- US-A1- 2007 270 281
- US-A1- 2008 125 944
- KOENIG, R.J ET AL: 'Vocational and body builder controls features of the Allison 1000/2000/2400 Series(TM) automatic transmission' SAE PAPER 1999-01-3744 pages 1 - 8, XP003026072

## Description

### TECHNICAL FIELD

The present invention relates to a method and a system for automated gear shift control. In particular the present invention relates to a method and a system for automatically shifting gear to a neutral gear.

### BACKGROUND

Heavy trucks can be used for a number of different purposes. Hence specialized trucks have been developed to address different needs for different users. Some trucks are used for work requiring a lot of start and stop. Typically trucks for distribution, refuse collection and other types of transport in built-up areas are doing a lot of start and stop.

Refuse collecting vehicles (RCVs) are often doing a lot of start and stop and raising engine speed to compact the garbage they pick up. To allow high engine speeds without damaging the converter of the automatic gearbox it is necessary to engage neutral gear. When doing a lot of start and stop it would therefore be convenient if the driver did not have to manually shift gear every time the vehicle stopped.

To solve this problem a conventional RCV can be made to support an automatic neutral controlled by using signal active when parking brake is applied. With this application, the function engages neutral when the driver applies the parking brake. The gearbox remains in neutral as long as the parking brake is applied. When the parking brake is released or the gear selector position is changed, the gearbox is again controlled by the gear selector.

However this solution typically requires manual work and consumes large amount of air when the driver controls the gearbox using parking brake at every stop and start. When applying parking brake air pressure from brake valves are release and when release parking brake, the brake valves are filled with air again. The vehicle has air tanks containing pressurized air. If the air pressure is consumed the parking brake can not be released. The air tanks are then automatically filled again but still resulting in unwanted stops and delays.

Application document US 2001/049575 A1 discloses a method and a control system for automatic shift to a neutral gear according to the preamble of independent claims 1 and 6.

Hence there exists a need for an improved system and method for automatically engaging disengaging of a neutral gear.

### SUMMARY

It is an object of the present invention to provide a method and a system providing enhanced automatic neutral gear functionality.
It is an object of the present invention to provide a method and system to verify safe control of automatic neutral gear functionality.
It is another object of the present invention to provide a method and a system enabling engine control combined with automatic gear functionality.
It is another object of the present invention to provide a method and system that reduces or eliminates the number of manual work tasks required when shifting to a neutral gear.

The above objects are obtained by the method and system as set out in independent claims 1 and 6.

Thus, the invention relates to a method and system for of automatic shift to a neutral gear of a motorized vehicle. The vehicle is provided with an automatic gear box controlled by a control unit. When automatically shifting to neutral, it is sensed that the foot brake pedal is actuated. It is determined if that the vehicle will remain in a stationary position with the neutral gear engaged. If it has been determined that the vehicle will remain in a stationary position with the neutral gear engaged an automatic shift to neutral gear is enabled when the foot brake pedal is actuated.

Hence in accordance with the present invention a function support automatic neutral gear control using footbrake pedal is supported. This will solve the problem that it is not always suitable to engage parking brake at every stop.

Moreover the present invention solves the problem of risks occurring when vehicle is in an up-hill position. Thus in accordance with one embodiment the present invention if the driver release brake pedal in an up-hill the vehicle will not start to roll backwards. Thus a problem using brake pedal based automatic neutral is the hazard of rolling backwards when vehicle is situated in an up-hill (or down-hill). When the driver controls the gearbox with brake pedal and he must release the brake pedal to enable the gear to be engaged. Doing so with neutral gear engaged could cause vehicle to roll backwards. Rolling backwards will not only be dangerous but will also prevent gearbox to engage gear.
This problem is solved by the present invention by only allowing an automatic shift to a neutral gear if it has been determined that rolling can be efficiently prevented.

In accordance with one embodiment an active electronic brake control is required to ensure brakes to be engaged and continuously hold the vehicle in order to allow a shift to neutral gear to be automatically executed. In another embodiment the slope of the road is checked before allowing an automatic shift to neutral gear. Thus, in accordance with the present invention if the vehicle is in risk of rolling backwards the system will not allow the neutral gear to be automatically engaged.

In another embodiment an electronic engine control is used to ensure that the gear is allowed to be engaged after neutral gear has been automatically engaged. Hereby engine speeds above a threshold for the gearbox to allow gear to be engaged are avoided. In addition different engine speeds can be allowed depending of if vehicle is moving or stationary. This will solve the problem arising when using automatic neutral and a high engine speed prevents the gearbox to allow gear to be engaged. For example high engine speeds due to the gas pedal being depressed by the driver or a remote control of engine speeds is dependant if vehicle is moving or being stationary.

The invention also extends to a computer program employing the method and system as set out above.

### BRIEF DESCRIPTION OF THE DRAWINGS

The present invention will now be described in more detail by way of nonlimiting examples and with reference to the accompanying drawings, in which:
- Fig. 1 is a general partial view of an automatic gear shifting system of a motorized vehicle, and
- Fig. 2 is a flow chart illustrating steps performed in a control procedure when shifting to neutral gear.

### DETAILED DESCRIPTION

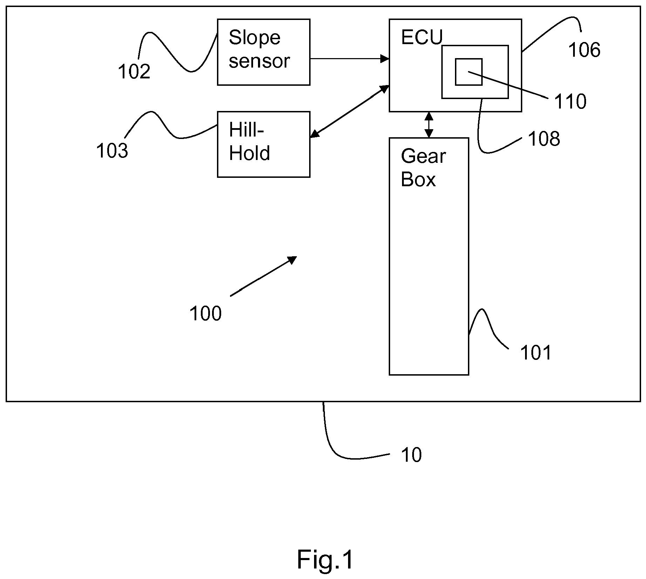

In Fig.1 selected parts of an exemplary gear shifting system 100 of a motor vehicle 10 is schematically depicted. The system 100 depicted in Fig. 1 can for example be designed to be part of a truck or any other heavy vehicle and comprises a gear box 101. The exemplary automatic gear box 101 in Fig. 1 is controlled by a computer in the form of an electronic control unit (ECU) 106. The ECU 106 is typically also connected to the engine to control the engine. In addition sensors provided in association with the engine provide sensor signals to the ECU 106. In particular the control unit 106 can be connected to a slope sensor 102 for determining the slope of the road where the vehicle is located. Also the electronic control unit 106 can be enabled to receive data from an automatic braking system 103 such as a hill-hold function provided in the vehicle 10.

Using the sensor signals from the engine and other signals provided from other parts of a motor vehicle in which the engine is located the ECU 106 exercises control of the gear box 101 and the engine using some programmed computer instructions or similar means. Typically, the programmed computer instructions are provided in the form of a computer program product 110 stored on a readable digital storage medium 108, such as memory card, a Read Only Memory (ROM) a Random Access Memory (RAM), an EPROM, an EEPROM or a flash memory.

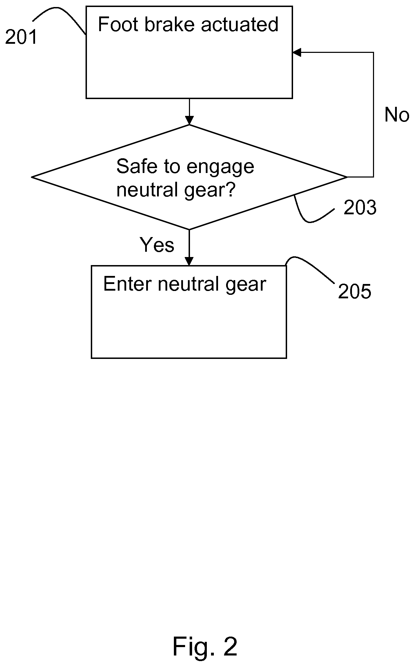

In Fig. 2 a flow chart illustrating steps performed in a control procedure when exercising control of the gear box is shown. In accordance with the present invention a neutral gear can be programmed to be automatically engaged by the brake pedal. In order to ensure that the vehicle does not start to roll after neutral gear has been engaged, the neutral gear is only engaged if it has been determined that the vehicle cannot start to roll based on one or several criteria checked by the system.

In accordance with one embodiment an electronic brake control of brakes which are continuously held automatically is required to the driver to be able to activate a mode where a shift to neutral gear is automatically executed. For example a so called hill hold function can be used to ensure that the vehicle does not start to roll when brake pedal is released and gear has not yet been verified to be applied. In another embodiment the slope of the road is checked before allowing an automatic shift to neutral gear. Hereby if vehicle is in risk of rolling backwards the gearbox will not allow the neutral gear to be automatically engaged thereby providing a safe automatic system for shifting to neutral gear in response to actuating the foot brake.

The automatic gear shifting to neutral can be programmed to be engaged in a tailor made manner to suit any particular kind of driving pattern. For example the function can be setup to engage neutral only when driving forward or both directions, i.e. forward/backwards. In one embodiment the system can be programmed to re-engage gear automatically after the brake pedal is released or if the driver must re-select gear using gear selector after neutral has been automatically engaged. In one embodiment the vehicle must be at a complete stop before the neutral gear can be automatically engaged.

Below an exemplary scenario describing a possible use of the present invention is described.
First the driver can initiate interaction for the automatic neutral gear function by enabling the automatic neutral function and possibly also an automatic brake function such as a Hill-hold function. Enabling automatic neutral can be performed in parallel to activating other functionality as for example selecting "Collect Garbage Mode". Thus if a particular mode is activated such as a collect garbage mode the automatic neutral function is automatically selected. The automatic brake function such as Hill-hold can be enabled using a switch in the dashboard of the vehicle or can be automatically enabled when the automatic neutral function is selected. When the motorized vehicle has an automatic neutral functionality enabled the control system can, if desired, be adapted to control engine to higher idle speed than when the vehicle is operated in a conventional mode for example when driving the vehicle.

When in a mode with the automatic neutral selected the driver makes a stop by depressing brake pedal enough to make the vehicle stop from moving. When it has been determined that the automatic brake Hill-hold is active and hold the vehicle in a stationary position, the gearbox is controlled to engage neutral gear. Before neutral is engaged engine speed is at high idle rotating the converter producing heat from friction. When neutral gear is engaged system can control engine to higher engine speeds, above high idle allowing bodywork hydraulics to increase flow i.e. work faster if the control system is configured to support such a behavior. When activated the driver gets feedback from the instrument cluster informing driver that neutral gear is automatically engaged. When driver wants to leave the brake pedal is released and gear is engaged. During engagement of gear high engine speeds are prevented by disabling the foot gas pedal and the engine speed is then lowered to high idle. When gearbox signals gear will be or is engaged the foot gas pedal is enabled and driver can control engine speed and move vehicle forward again.

In Fig. 2 a flowchart illustrating steps performed in a control procedure when automatically shifting to neutral gear. First, in a step 201 it is determined that the foot brake is actuated. If the footbrake is actuated the procedure continues to a step 203. In step 203 it is checked if it is safe to automatically engage the neutral gear. The check in step 203 can comprise a number of different tasks such as checking that an automatic brake system is activated and/or checking that the vehicle is on level ground and/or checking that the vehicle is at a complete stand-still. Which criteria that has to be fulfilled in order to allow an automatic shift to neutral gear can be different for different applications and the body builder can configure the criteria differently for different vehicles if desired. If, based on the criteria used for the particular vehicle it is determined the procedure continues to a step 205 in which neutral gear is automatically engaged. Else if it is determined in step 203 that it is not safe to automatically switch to neutral gear the procedure returns to step 201.

Also, as described above, the system described herein can be programmed to control the engine speed differently in case the neutral gear has been automatically engaged. When in a stationary state where the neutral gear is engaged the engine speed can be set to a higher set speed than in the moving state where the neutral gear is not engaged. For example when in a stationary state engine speed can set to higher idling speed such as 1400rpm compared to for example 800rpm when in the moving state where the driveline is engaged. Also the gas pedal is disabled as long as gearbox signals gear not engaged to inhibit engine speed above threshold for gear to be engaged.

To allow gearshift engine speed, in this example, must be below a predetermined highest idling speed such as 900rpm. The function disables the gas pedal and lower engine speed below the highest idling speed, 900rpm in the example given, until gear shift is in progress. Then gear is engaged and gas pedal is enabled so that the driver can continue driving with control of gas pedal.

Using the method and system as described herein a motorized vehicle doing many starts and stops will be easier to drive because there will be less manual operation of the vehicle. The system will be safe and reliable to operate because the electronic brake and engine control. The system can be easily tailor made by a body builder for any type of special purpose vehicle by configuring parameters that will determine when and how an automatic neutral gear is enabled.

## Claims

1. A method for automatic shift to a neutral gear in combination with engine control of a motorized vehicle (10) provided with an automatic gear box (101) controlled by a control unit (106), comprising the steps of:
- sensing actuation of the foot brake pedal (201),
- determining that the vehicle can be held in a safe position for automatic engagement of neutral gear (203) comprising the step determining that the vehicle will remain in a stationary position with the neutral gear engaged, and the step of determining the slope of the road where the vehicle (10) is located,
- automatically shifting (205) to neutral gear when it has been sensed that the foot brake pedal is actuated if it has been determined that the vehicle will remain in a stationary position with the neutral gear engaged,
the method being **characterized by** the steps of:
- increasing the idling speed when shifting to neutral gear, and
- disabling the gas pedal as long as the gearbox signals that a gear is not engaged to inhibit engine speed above a threshold for gear to be engaged.

2. The method according to claim 1, **characterized In that** the step of determining that the vehicle can be held in a safe position with a neutral gear engaged (203) comprises the step of checking that an electronic brake control is enabled and holding the vehicle to a stop.

3. The method according to claim 2, **characterized In that** the electronic brake control is a system with a hill-hold function.

4. The method according to any of claims 1 - 3, **characterized in that** the step of determining that the vehicle can be held in a safe position with a neutral gear engaged (203) comprises the step of checking that the vehicle is on level ground.

5. The method according to any of claims 1 - 4, **characterized in that** the step of determining that the vehicle can be held in a safe position with a neutral gear engaged (203) comprises the step of checking that the vehicle is at a complete stop.

6. A control system (100) for automatically shifting to a neutral gear in combination with engine control of a motorized vehicle (10) provided with an automatic gear box (101) controlled by a control unit (106), comprising:
- means (106) for sensing actuation of the foot brake pedal,
- means (106) for determining that the vehicle can be held in a safe position for automatic engagement of neutral gear (203) comprising the step determining that the vehicle will remain in a stationary position with the neutral gear engaged, and by means of a slope sensor determining the slope of the road where the vehicle (10) is located,
- means (106) for automatically shifting to neutral gear when it has been sensed that the foot brake pedal is actuated if it has been determined that the vehicle will remain in a stationary position with the neutral gear engaged,
the system being **characterized by**:
- means for increasing the idling speed when shifting to neutral gear, and
- means for disabling the gas pedal as long as the gearbox signals that a gear is not engaged to inhibit engine speed above a threshold for gear to be engaged.

7. The system according to claim 6, **characterized by** means for checking that an electronic brake control (103) is enabled and holding the vehicle to a stop connected to the means for determining that the vehicle will remain in a stationary position.

8. The system according to claim 7, **characterized in that** the electronic brake control is a system with a hill-hold function.

9. The system according to any of claims 6 - 8, **characterized by** means (102) for checking that the vehicle is on level ground connected to the means for determining that the vehicle will remain in a stationary position.

10. The system according to any of claims 6 - 9, **characterized by** means for checking that the vehicle is at a complete stop connected to the means for determining that the vehicle will remain in a stationary position.

11. A motorized vehicle (10) comprising the system according to any of the claims 6 - 10.

12. A computer program product (110) for automatically shifting to a neutral gear of a motorized vehicle (10) provided with an automatic gear box (101) controlled by a control unit (106), the computer program product comprising program segments that when executed on a computer for causes the computer to perform the steps of the method according to any of claims 1 - 5.

13. A digital storage medium (108) having the computer program product according to claim 12 stored thereon.

## Patentansprüche

1. Verfahren zum automatischen Schalten in einen Leerlauf in Kombination mit einer Motorsteuerung eines Kraftfahrzeugs (10), das mit einem automatischen Getriebe (101) ausgestattet ist, welches von einer Steuereinheit (106) gesteuert wird, umfassend die Schritte:
- Detektieren einer Betätigung des Fuß-Bremspedals (201),
- Bestimmen, dass das Fahrzeug an einer sicheren Position zum automatischen Einlegen des Leerlaufs (203) gehalten werden kann, umfassend den Schritt eines Bestimmens, dass das Fahrzeug mit dem eingelegten Leerlauf in einer unbewegten Position verharren wird, und den Schritt eines Bestimmens der Steigung der Straße, auf der sich das Fahrzeug (10) befindet,
- automatisches Schalten (205) in den Leerlauf, wenn detektiert wurde, dass das Fuß-Bremspedal betätigt wurde, falls bestimmt wurde, dass das Fahrzeug mit dem eingelegten Leerlauf in einer unbewegten Position verharren wird,
wobei das Verfahren durch die Schritte gekennzeichnet ist:
- Erhöhen der Leerlaufdrehzahl, wenn in den Leerlauf geschaltet wird, und
- Deaktivieren des Gaspedals, solange das Getriebe signalisiert, dass kein Gang eingelegt ist, um eine Motordrehzahl oberhalb eines Grenzwerts zum Einlegen eines Gangs zu verhindern.

2. Verfahren gemäß Anspruch 1, **dadurch gekennzeichnet, dass** der Schritt des Bestimmens, dass das Fahrzeug mit eingelegtem Leerlauf (203) an einer sicheren Position gehalten werden kann, den Schritt eines Überprüfens umfasst, dass eine elektronische Bremssteuerung aktiviert ist, und eines Haltens des Fahrzeugs zu einem Anhalten.

3. Verfahren gemäß Anspruch 2, **dadurch gekennzeichnet, dass** die elektronische Bremssteuerung ein System mit einer Berghaltefunktion ist.

4. Verfahren gemäß einem der Ansprüche 1 bis 3, **dadurch gekennzeichnet, dass** der Schritt des Bestimmens, dass das Fahrzeug mit eingelegtem Leerlauf (203) an einer sicheren Position gehalten werden kann, den Schritt eines Überprüfens umfasst, dass sich das Fahrzeug auf einem ebenen Untergrund befindet.

5. Verfahren gemäß einem der Ansprüche 1 bis 4, **dadurch gekennzeichnet, dass** der Schritt des Bestimmens, dass das Fahrzeug mit eingelegtem Leerlauf (203) an einer sicheren Position gehalten werden kann, den Schritt eines Überprüfens umfasst, dass das Fahrzeug vollständig angehalten hat.

6. Steuersystem (100) zum automatischen Schalten in einen Leerlauf in Kombination mit einer Motorsteuerung eines Kraftfahrzeugs (10), das mit einem automatischen Getriebe (101) ausgestattet ist, welches von einer Steuereinheit (106) gesteuert wird, umfassend:
- Mittel (106) zum Detektieren einer Betätigung des Fuß-Bremspedals (201),
- Mittel (106) zum Bestimmen, dass das Fahrzeug an einer sicheren Position zum automatischen Einlegen des Leerlaufs (203) gehalten werden kann, umfassend den Schritt eines Bestimmens, dass das Fahrzeug mit dem eingelegten Leerlauf in einer unbewegten Position verharren wird, und mittels eines Steigungssensors Bestimmen der Steigung der Straße, auf der sich das Fahrzeug (10) befindet,
- Mittel (106) zum automatisches Schalten (205) in den Leerlauf, wenn detektiert wurde, dass das Fuß-Bremspedal betätigt wurde, falls bestimmt wurde, dass das Fahrzeug mit dem eingelegten Leerlauf in einer unbewegten Position verharren wird,
wobei das System **gekennzeichnet ist durch**:
- Mittel zum Erhöhen der Leerlaufdrehzahl, wenn in den Leerlauf geschaltet wird, und
- Mittel zum Deaktivieren des Gaspedals, solange das Getriebe signalisiert, dass kein Gang eingelegt ist, um eine Motordrehzahl oberhalb eines Grenzwerts zum Einlegen eines Gangs zu verhindern.

7. System gemäß Anspruch 6, **gekennzeichnet durch** Mittel zum Überprüfen, dass eine elektronische Bremssteuerung (103) aktiviert ist und das Fahrzeug zu einem Anhalten hält, die verbunden sind mit den Mitteln zum Bestimmen, dass das Fahrzeug in einer unbewegten Position verharren wird.

8. System gemäß Anspruch 7, **dadurch gekennzeichnet, dass** die elektronische Bremssteuerung ein System mit einer Berghaltefunktion ist.

9. System gemäß einem der Ansprüche 6 bis 8, **gekennzeichnet durch** Mittel (102) zum Überprüfen, dass sich das Fahrzeug auf einem ebenen Untergrund befindet, die verbunden sind mit den Mitteln zum Bestimmen, dass das Fahrzeug in einer unbewegten Position verharren wird.

10. System gemäß einem der Ansprüche 6 bis 9, **gekennzeichnet durch** Mittel zum Überprüfen, dass das Fahrzeug vollständig angehalten hat, die verbunden sind mit den Mitteln zum Bestimmen, dass das Fahrzeug in einer unbewegten Position verharren wird.

11. Kraftfahrzeug (10), umfassend ein System gemäß einem der Ansprüche 6 bis 10.

12. Computerprogrammprodukt (110) zum automatischen Schalten in einen Leerlauf eines Kraftfahrzeugs (10), das mit einem automatischen Getriebe (101) ausgestattet ist, welches von einer Steuereinheit (106) gesteuert wird, wobei das Computerprogrammprodukt Programmsegmente umfasst, die, wenn sie auf einem Computer ausgeführt werden, den Computer dazu veranlassen, die Schritte des Verfahrens gemäß einem der Ansprüche 1 bis 5 durchzuführen.

13. Digitales Speichermedium (108), welches das Computerprogrammprodukt gemäß Anspruch 12 auf sich gespeichert hat.

## Revendications

1. Procédé de passage automatique au point mort en combinaison avec une commande de moteur d'un véhicule motorisé (10) muni d'une boîte de vitesses automatique (101) commandée par une unité de commande (106), comprenant les étapes consistant à :
- détecter l'actionnement de la pédale de frein (201),
- déterminer que le véhicule peut être maintenu dans une position de sécurité pour l'enclenchement automatique du point mort (203), comprenant l'étape consistant à déterminer que le véhicule restera dans une position stationnaire avec le point mort enclenché, et l'étape consistant à déterminer la pente de la route où le véhicule (10) est situé,
- passer automatique (205) au point mort lorsqu'il a été détecté que la pédale de frein est actionnée s'il a été déterminé que le véhicule restera dans une position stationnaire avec le point mort enclenché, le procédé étant **caractérisé par** les étapes consistant à :
- augmenter la vitesse de ralenti lors du passage au point mort, et
- désactiver la pédale d'accélérateur tant que la boîte de vitesses signale qu'aucune vitesse n'est enclenchée pour limiter la vitesse du moteur au-delà d'un seuil d'enclenchement de la vitesse.

2. Procédé selon la revendication 1, **caractérisé en ce que** l'étape consistant à déterminer que le véhicule peut être maintenu dans une position de sécurité avec un point mort enclenché (203) comprend l'étape consistant à vérifier qu'une commande électronique de freinage est activée et à maintenir le véhicule à l'arrêt.

3. Procédé selon la revendication 2, **caractérisé en ce que** la commande électronique de freinage est un système ayant une fonction anti-recul.

4. Procédé selon l'une quelconque des revendications 1 à 3, **caractérisé en ce que** l'étape consistant à déterminer que le véhicule peut être maintenu dans une position de sécurité avec un point mort enclenché (203) comprend l'étape consistant à vérifier que le véhicule se trouve sur un terrain plat.

5. Procédé selon l'une quelconque des revendications 1 à 4, **caractérisé en ce que** l'étape consistant à déterminer que le véhicule peut être maintenu dans une position de sécurité avec un point mort engagé (203) comprend l'étape consistant à vérifier que le véhicule est à l'arrêt complet.

6. Système de commande (100) pour le passage automatique au point mort en combinaison avec une commande de moteur d'un véhicule motorisé (10) muni d'une boîte de vitesses automatique (101) commandée par une unité de commande (106), comprenant :
- un moyen (106) pour détecter l'actionnement de la pédale de frein,
- un moyen (106) pour déterminer que le véhicule peut être maintenu dans une position de sécurité pour l'enclenchement automatique du point mort (203), comprenant l'étape consistant à déterminer que le véhicule restera dans une position stationnaire avec le point mort enclenché, et grâce à un capteur de pente déterminant la pente de la route sur laquelle le véhicule (10) est stationné,
- un moyen (106) pour passer automatiquement au point mort lorsqu'il a été détecté que la pédale de frein est actionnée s'il a été déterminé que
le véhicule restera à l'arrêt avec le point mort enclenché, le système étant **caractérisé par** :
- un moyen pour augmenter la vitesse de ralenti lors du passage au point mort, et
- un moyen pour désactiver la pédale d'accélérateur tant que la boîte de vitesses signale qu'aucune vitesse n'est enclenchée pour limiter la vitesse du moteur au-delà d'un seuil d'enclenchement de la vitesse.

7. Système selon la revendication 6, **caractérisé par** un moyen pour vérifier qu'une commande électronique de freinage (103) est activée et maintenir le véhicule à l'arrêt, lié au moyen pour déterminer que le véhicule restera dans une position stationnaire.

8. Système selon la revendication 7, **caractérisé en ce que** la commande électronique de freinage est un système ayant une fonction anti-recul.

9. Système selon l'une quelconque des revendications 6 à 8, **caractérisé par** un moyen (102) pour vérifier que le véhicule se trouve sur un terrain plat, lié au moyen pour déterminer que le véhicule restera dans une position stationnaire.

10. Système selon l'une quelconque des revendications 6 à 9, **caractérisé par** un moyen pour vérifier que le véhicule est à l'arrêt complet, lié au moyen pour déterminer que le véhicule restera dans une position stationnaire.

11. Véhicule motorisé (10) comprenant le système selon l'une quelconque des revendications 6 à 10.

12. Programme informatique en tant que produit (110) de passage automatique au point mort d'un véhicule motorisé (10) muni d'une boîte de vitesses automatique (101) commandée par une unité de commande (106), ce programme informatique en tant que produit comprenant des segments de programme qui, lorsqu'il sont exécutés sur un ordinateur, amènent l'ordinateur à réaliser les étapes du procédé selon l'une quelconque des revendications 1 à 5.

13. Support de stockage numérique (108) sur lequel est stocké le programme informatique en tant que produit selon la revendication 12.
